# EUROPEAN PATENT APPLICATION

(11) **EP 4 737 264 A1**
(43) Date of publication of application: **06.05.2026**
(21) Application number: 25213614.8
(22) Date of filing: 05.11.2025
(51) Int. Cl.: B61L 15/00, B60L 15/00, B61C 15/08

(54) **SYSTEM AND METHOD FOR DETERMINING AN ADHESION VALUE OF A RAIL**

(30) Priority: 05.11.2024 IT 202400024780
(71) Applicant: Faiveley Transport Italia S.p.A., 10045 Piossasco (TO) (IT)
(72) Inventor: FREA, Matteo, I-10060 CANTALUPA (Torino) (IT)
(74) Representative: Cristinelli, Luca

(57) **Abstract**

A system (100) for determining an adhesion value of a rail (R) is described, arranged to be installed on a vehicle (V), comprising:
- optical radiation generating means (102) arranged to emit an optical radiation (Rad) in the direction of the rail (R) on which said vehicle (V) is travelling;
- optical radiation sensor means (104) arranged to detect an intensity value of at least part of a reflected optical radiation (RadRef) which is generated by at least one of:
• the reflection of said optical radiation (Rad) on said rail (R);
• the reflection of said optical radiation (Rad) on a contaminating material (202) arranged on said rail (R);

- electronic processing means (108) arranged to determine the adhesion value of the rail (R) as a function of the intensity value detected by said optical radiation sensor means (104). A corresponding method is also described.

## Description

### Technical field

The present invention generally belongs to the field of vehicles; in particular, the invention relates to a system for determining an adhesion value of a rail, a method for determining an adhesion value of a rail, and to a vehicle.

### Prior art

The known techniques for measuring wheel-rail adhesion are fundamentally based on "indirect" solutions relying on image acquisition sensors or on "direct" solutions that implement a braking or traction control dedicated to estimating adhesion. In this second category fall, for example, the solutions that apply a known braking effort to one or more axles and detect the response in terms of rotational speed. From the braking effort and the angular acceleration, it is possible to deduce the available adhesion in the wheel-rail contact.

Disadvantageously, the solutions based on image acquisition sensors require complex electronic solutions, based on artificial intelligence algorithms, for the correct interpretation of the acquired images.

Direct adhesion measurements, on the other hand, although reliable, can only be carried out if a braking torque is applied to the axle. Such measurement, therefore, can only be carried out during the braking step, unless a dedicated brake control is implemented that, for example, periodically applies a known braking effort and detects the response of the axle in terms of angular acceleration.

Disadvantageously, the solution of the dedicated control allows the measurement of adhesion with the desired space-time resolution, but requires the periodic application, which is unnecessary for the operation of the vehicle, of a braking effort to at least one axle of the railway vehicle.

### Summary of the invention

One object of the present invention is to provide solutions for determining an adhesion value of a rail that do not require the periodic application of an unnecessary braking effort and that do not necessarily require electronic solutions based on complex evaluations of images, for example performed through artificial intelligence algorithms.

Said and other objects and advantages are achieved by:
- according to a first aspect of the invention, a system for determining an adhesion value of a rail having the features defined in claim 1;
- according to a second aspect of the invention, a vehicle having the features defined in claim 9;
- according to a third aspect of the invention, a method for determining an adhesion value of a rail having the features defined in claim 10.

Preferred embodiments of the invention are defined in the dependent claims, the content of which is to be understood as an integral part of the present description.

### Brief description of the drawings

The functional and structural features of some preferred embodiments of a system for determining an adhesion value of a rail, of a method for determining an adhesion value of a rail and of a vehicle according to the invention will now be described. Reference is made to the accompanying drawings, in which:
- Figure 1 illustrates an embodiment of a system for determining an adhesion value of a rail according to the present invention;
- Figures 2a and 2b illustrate two exemplary situations in which the adhesion value can be high or low; and
- Figure 3 illustrates a further embodiment of a system for determining an adhesion value of a rail according to the present invention.

### Detailed description

Before explaining in detail a plurality of embodiments of the invention, it should be clarified that the invention is not limited in its application to the construction details and the configuration of the components presented in the following description or illustrated in the drawings. The invention is capable of taking other embodiments and of being carried out or implemented practically in different ways. It should also be understood that the phraseology and terminology are intended to be descriptive and not limiting. The use of "including" and "comprising" and their variations are to be understood as encompassing the elements recited thereafter and their equivalents, as well as additional elements and their equivalents.

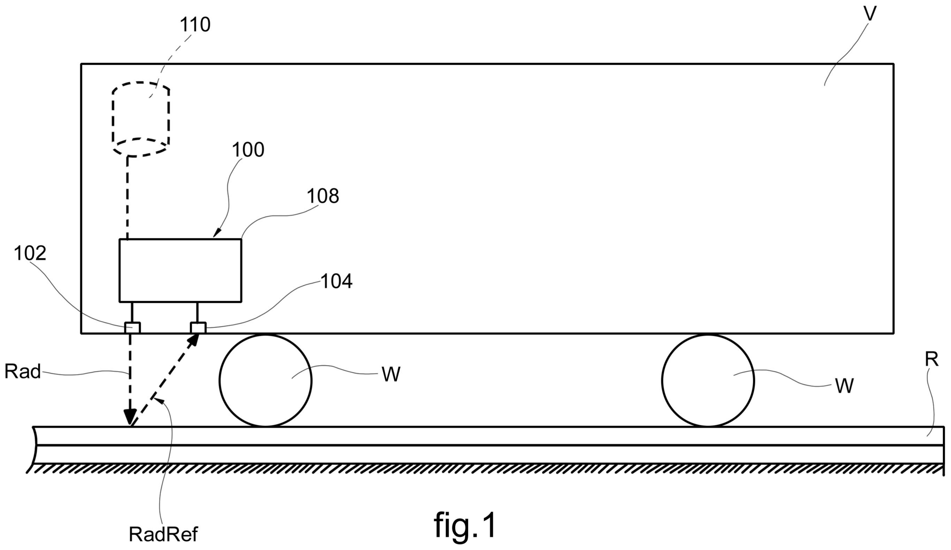

With initial reference to figure 1, hereinafter is described an embodiment of a system for determining an adhesion value of a rail.

The system 100 for determining an adhesion value of a rail R is arranged to be installed on a vehicle V and comprises:
- optical radiation generating means 102 arranged to emit an optical radiation Rad in the direction of said rail R on which said vehicle V is travelling/transiting;
- optical radiation sensor means 104 arranged to detect an intensity value of at least part of a reflected optical radiation RadRef, which is generated by at least one of:
   - the reflection, of said optical radiation Rad emitted by the optical radiation generating means, on said rail R;
   - the reflection, of said optical radiation Rad emitted by the optical radiation generating means, on a contaminating material 202 arranged on said rail R.

For example, when said rail R is substantially clean or when said rail R is contaminated by a contaminating material that allows the passage of said optical radiation Rad, the reflected optical radiation RadRef can be generated by the reflection on said rail R of said optical radiation Rad emitted by the optical radiation generating means.

Or, for example, when said rail R is contaminated by a contaminating material that does not allow the passage of said optical radiation Rad, the reflected optical radiation RadRef can be generated by the reflection on said contaminating material 202 of said optical radiation Rad emitted by the optical radiation generating means.

In a further case, for example, when said rail R is contaminated by a contaminating material that partially allows the passage of said optical radiation Rad, the reflected optical radiation RadRef can be generated in part by the reflection, of said optical radiation Rad emitted by the optical radiation generating means, on said rail R and in part by the reflection, of said optical radiation Rad emitted by the optical radiation generating means, on said contaminating material that only partially allows the passage of said optical radiation Rad.

By way of clarification, the optical radiation generating means 102 can be arranged to emit an optical radiation Rad in the direction of a rolling surface of the rail R on which a wheel of said vehicle V will roll during travel.

In general, by rail contaminated by a contaminating material that allows the passage of said optical radiation Rad, it is meant the condition in which on said rail R (in particular on the surface intended for the rolling of a wheel of a vehicle) a contaminating material is present/arranged that allows the passage of the optical radiation Rad.

In general, by rail contaminated by a contaminating material that does not allow the passage of said optical radiation Rad, it is meant the condition in which on said rail R (in particular on the surface intended for the rolling of a wheel of a vehicle) a contaminating material is present/arranged that does not allow the passage of said optical radiation Rad.

In a non-limiting example, the first contaminating material that allows the passage of said optical radiation Rad can comprise any of water, oil, etc....

In a non-limiting example, the second contaminating material that does not allow the passage of said optical radiation Rad can comprise any of decayed leaves, rust, snow, ice, etc....

The system 100 for determining an adhesion value of a rail R further comprises electronic processing means 108 arranged to determine the adhesion value of the rail R as a function of the intensity value, of said at least part of the reflected optical radiation RadRef, detected by said optical radiation sensor means 104.

By the term "detected" it can for example be meant measured or determined.

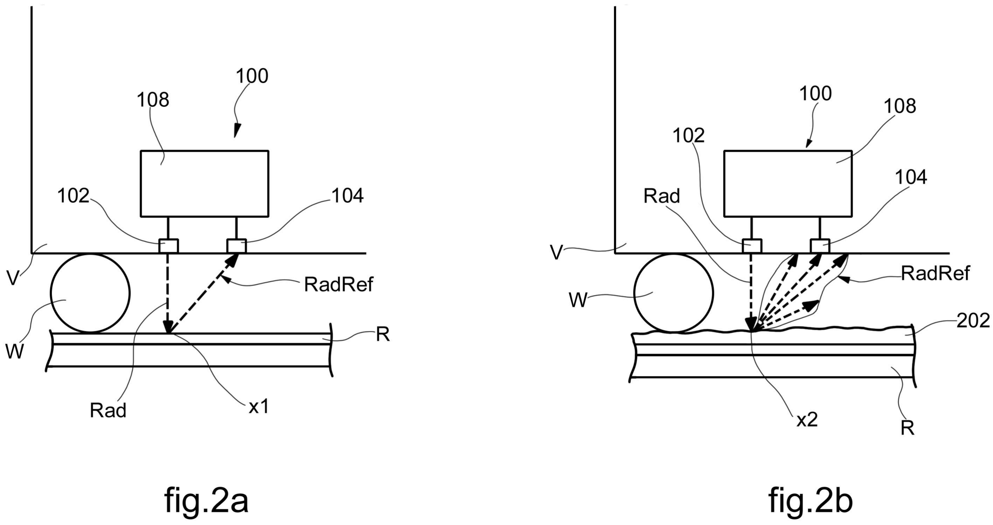

As can be observed in figures 2a and 2b, the optical radiation Rad emitted by the optical radiation generating means 102 can be reflected by the rail R and/or by any contaminating material lying/arranged on the rail.

For example, when the reflected optical radiation RadRef is generated by the reflection of the optical radiation Rad emitted by the optical radiation generating means 102 on said rail R that is clean or contaminated by a contaminating material that allows the passage of said optical radiation Rad, since the rail has a substantially smooth surface at the point of reflection x1, the reflected optical radiation RadRef has a high intensity because the light band scattered is relatively narrow. In other words, since there is a narrow scattered light band, most of the reflected optical radiation RadRef can reach the optical radiation sensor means 104, which will consequently detect a high intensity value of the reflected optical radiation RadRef (intensity value of the reflected optical radiation RadRef substantially equal/close to the intensity value of the optical radiation Rad emitted by the optical radiation generating means 102).

For example, in the case illustrated in figure 2a, in which the reflection of said optical radiation Rad emitted by the optical radiation generating means is generated by said substantially clean rail R (case of high adhesion value), it can be observed that the scattered light band is narrow.

Observing figure 2a, it can clearly be seen that also all the reflected optical radiation RadRef can be detected by said optical radiation sensor means 104.

Conversely, for example, when the reflected optical radiation RadRef is generated by the reflection of said optical radiation Rad emitted by the optical radiation generating means 102 on a contaminating material 202 that does not allow the passage of said optical radiation Rad and is arranged on said rail R, since such contaminant has a rougher surface (less smooth) at the point of reflection x2, compared to the surface of a rail, such reflected optical radiation RadRef has a low/reduced intensity because the scattered light band is relatively wide. In other words, since there is a wide scattered light band, most of the reflected optical radiation RadRef will not reach the optical radiation sensor means 104, which will detect a low intensity value of the reflected optical radiation RadRef (intensity value of the reflected optical radiation RadRef reduced with respect to the intensity value of the optical radiation Rad emitted by the optical radiation generating means 102).

In the example of figure 2b, in which the rail is contaminated by a contaminating material 202 that does not allow the passage of said optical radiation Rad (i.e. there is a reduced adhesion value), it can be observed that the scattered light band is wide.

Observing figure 2b, it can clearly be seen that only part of the reflected optical radiation RadRef can reach the optical radiation sensor means 104 and be detected by such optical radiation sensor means 104.

Starting from the intensity value of said at least part of the reflected optical radiation RadRef detected by said optical radiation sensor means 104 it is thus possible to estimate/determine the adhesion value of the rail R that resulted in the reception of a reflected optical radiation RadRef having such intensity value.

By way of example, the electronic processing means 108 can be or comprise at least one among a processor, a microprocessor, a controller, a microcontroller, an FPGA, a PLC, or the like.

Also by way of example, the optical radiation generating means 102 can be or comprise a single optical radiation generator (also referred to as emitter). Moreover, for example, the optical radiation sensor means 104 can comprise a single optical radiation sensor (also referred to as receiver).

Preferably, the single optical radiation generator can be arranged to emit the optical radiation Rad in the direction of said rail R. The single optical radiation sensor can be arranged to detect the intensity value of at least part of the reflected optical radiation RadRef. The electronic processing means 108 can be arranged to determine the adhesion value of the rail R solely as a function of the intensity value detected by said single optical radiation sensor.

In other words, as can be observed in the figures, the system can be implemented using a single optical radiation generator, which sends the radiation toward the rail, and a single optical radiation sensor, which detects the intensity of the radiation reflected from the rail itself or from any contaminants present thereon. The processing of the adhesion value is therefore carried out solely on the basis of the signal detected by this specific sensor. The advantages of this configuration are numerous: the solution is simplified and compact, reducing the number of necessary components and hence the costs and complexity of installation and maintenance. Moreover, the use of only one generator and only one sensor allows for reduced space requirement on the vehicle and facilitates the integration of the system even on already existing vehicles. Finally, the determination of the adhesion value is faster and more efficient, as it is based on a direct and linear measurement chain.

Preferably, to determine the adhesion value of the rail R as a function of the intensity value detected by said optical radiation sensor means 104, the electronic processing means 108 can be arranged to:
- compare the intensity value detected by said optical radiation sensor means 104 with a plurality of predetermined intensity values each associated with a respective adhesion value;
- determine that the adhesion value of the rail R corresponds to the adhesion value associated with the predetermined intensity value corresponding to the intensity value detected by said optical radiation sensor means 104 or closest to the intensity value detected by said optical radiation sensor means 104.

For example, the system for determining an adhesion value of a rail can comprise storage means 110 (for example a memory), in which the association between said plurality of predetermined intensity values and the respective adhesion values can be stored.

Preferably, the optical radiation Rad emitted by the optical radiation generating means can be any one of:
- an infrared radiation;
- a laser.

The above-mentioned examples of optical radiation are clearly non-limiting. Any further type of optical radiation may be used for the purposes of the present invention.

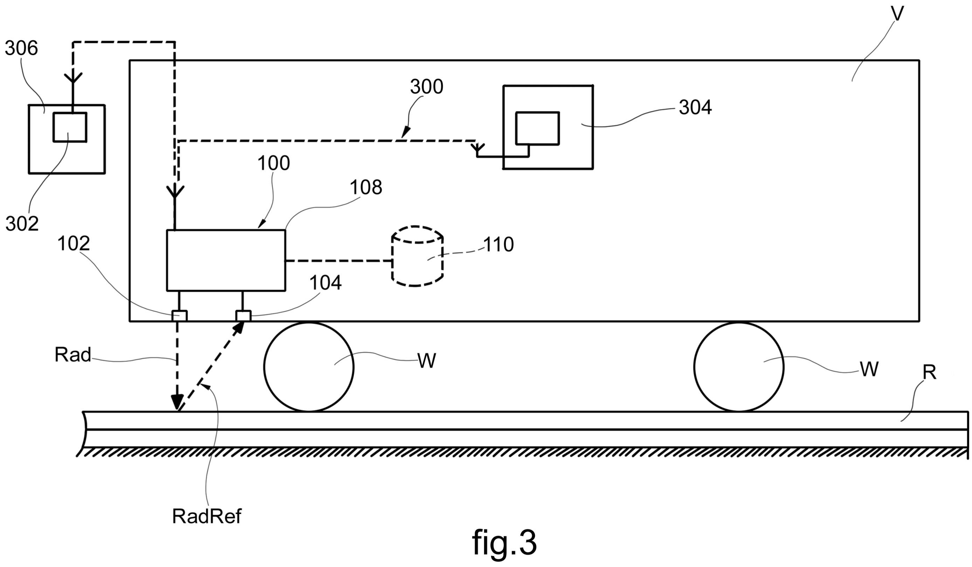

Preferably, as observable in figure 3, the system 100 for determining an adhesion value of a rail can further comprise communication means 300 arranged to allow transmission, from said electronic processing means 108 to second electronic processing means 302, of the determined adhesion value.

The communication means 300 can be wired or wireless. For example, the communication means can comprise a wired communication line or a wireless or Bluetooth communication line. For example, the communication means 300 can comprise an antenna, and/or a transmitter and/or a receiver.

Preferably, the second electronic processing means 302 can be comprised in a further system 304 installed on board the vehicle V.

Preferably, the further system installed on board the vehicle can be at least one of:
- an adhesion recovery system;
- a system for managing skidding of at least one wheel of the vehicle;
- a braking control system of the vehicle;
- a management and control system of the vehicle.

In a further embodiment, the second electronic processing means 302 can be arranged to be comprised in a further system 306 remote with respect to said vehicle V.

Preferably, the further system 306 remote with respect to said vehicle V can be:
- a traffic management system comprised in a control station remote with respect to the vehicle.

In a further aspect, the present invention relates to a vehicle comprising at least one wheel arranged to rotate on a rail and a system 100 for determining an adhesion value of a rail according to any one of the previously described embodiments.

Preferably, the vehicle can be a railway vehicle.

In yet a further aspect, the present invention relates to a method for determining an adhesion value of a rail R.

In one embodiment, the method for determining an adhesion value of a rail R is implemented by means of electronic processing means 108 and comprises the steps of:
i) emitting an optical radiation Rad in the direction of said rail R (for example, by means of optical radiation generating means 102 installed on a vehicle V, emitting the optical radiation Rad in the direction of said rail R on which said vehicle V is travelling/transiting);
ii) detecting (for example, by means of optical radiation sensor means 104 installed on the vehicle V) an intensity value of at least part of a reflected optical radiation RadRef, which is generated by at least one of:
   - the reflection, on said rail R, of said emitted optical radiation Rad;
   - the reflection, on a contaminating material 202 arranged on said rail R, of said emitted optical radiation Rad;
iii) determining the adhesion value of the rail R as a function of the intensity value detected in step ii).

Preferably, step iii) may further comprise the following steps:
- comparing the intensity value detected in step ii) with a plurality of predetermined intensity values each associated with a respective adhesion value;
- determining that the adhesion value of the rail R corresponds to the adhesion value associated with the predetermined intensity value corresponding to the intensity value detected in step ii) or closest to the intensity value detected in step ii).

Preferably, step i) may comprise: emitting the optical radiation Rad in the direction of said rail R by means of a single optical radiation generator.

Preferably, step ii) may comprise: detecting the intensity value of at least part of the reflected optical radiation RadRef, by means of a single optical radiation sensor.

Preferably, step iii) may comprise: determining the adhesion value of the rail R solely as a function of the intensity value detected by the single optical radiation sensor in step ii).

In other words, the method can be implemented using an optical radiation generator to send the radiation toward the rail and an optical radiation sensor to measure the intensity of the reflected radiation. The determination of the adhesion value of the rail can therefore be carried out based exclusively on the intensity value detected by this specific sensor.

As already explained for the system, this solution offers the following advantages: constructive simplicity and reduction in the number of components, lower costs of production, installation and maintenance, reduced space requirement, facilitating installation even on existing vehicles, and greater speed and efficiency in determining the adhesion value, thanks to a direct and linear measurement chain.

All the preferred embodiments previously described for the system for determining an adhesion value of a rail, and not repeated herein, can clearly be applied in an analogous manner to the method for determining an adhesion value of a rail.

The advantage achieved is therefore that of having provided solutions for determining an adhesion value of a rail that do not require the periodic application of an unnecessary braking effort and that do not necessarily require electronic solutions based on complex image evaluations, for example carried out by means of artificial intelligence algorithms.

Various aspects and embodiments of a system for determining an adhesion value of a rail, of a method for determining an adhesion value of a rail and of a vehicle according to the invention have been described. It is understood that each embodiment may be combined with any other embodiment. The invention is furthermore not limited to the described embodiments, but may be varied within the scope defined by the appended claims.

## Claims

1. System (100) for determining an adhesion value of a rail (R), arranged to be installed on a vehicle (V), comprising:
- optical radiation generating means (102) arranged to emit an optical radiation (Rad) in the direction of said rail (R) on which said vehicle (V) is travelling;
- optical radiation sensor means (104) arranged to detect an intensity value of at least part of a reflected optical radiation (RadRef) which is generated by at least one of:
• the reflection of said optical radiation (Rad) emitted by said optical radiation generating means on said rail (R);
• the reflection of said optical radiation (Rad) emitted by the optical radiation generating means on a contaminating material (202) arranged on said rail (R);
- electronic processing means (108) arranged for determining the adhesion value of said rail (R) as a function of the intensity value detected by said optical radiation sensor means (104).

2. System according to claim 1, wherein, for determining the adhesion value of the rail (R) as a function of the intensity value detected by said optical radiation sensor means (104), the electronic processing means (108) are arranged to:
- compare the intensity value detected by said optical radiation sensor means (104) with a plurality of predetermined intensity values each associated with a respective adhesion value;
- determine that the adhesion value of the rail (R) corresponds to the adhesion value associated with the predetermined intensity value corresponding to the intensity value detected by said optical radiation sensor means (104) or closer to the intensity value detected by said optical radiation sensor means (104).

3. System according to claim 1 or 2, wherein said optical radiation (Rad) emitted by said optical radiation generating means (102) is any one of:
- an infrared radiation;
- a laser.

4. System according to any one of the preceding claims, further comprising:
- communication means (300) arranged to permit transmission, from said electronic processing means (108) to second electronic processing means (302), of the determined adhesion value.

5. System according to claim 4, wherein said second electronic processing means (302) are comprised in a further system (304) installed in the vehicle (V).

6. System according to claim 5, wherein said further system (304) installed in the vehicle is at least one of:
- an adhesion recovery system;
- a system for managing skidding of at least one wheel of the vehicle;
- a braking control system of the vehicle;
- a management and control system of the vehicle.

7. System according to claim 4, wherein said second electronic processing means (302) are arranged to be comprises in a further system (306) remote from said vehicle (V).

8. System according to claim 7, wherein said further system (306) remote with respect to said vehicle (V) is:
- a traffic management system comprised in a control station remote with respect to said vehicle.

9. System according to any one of the preceding claims, wherein:
- the optical radiation generating means (102) comprise a single optical radiation generator arranged to emit the optical radiation (Rad) in the direction of said rail (R); and
- the optical radiation sensor means (104) comprise a single optical radiation sensor arranged to detect the intensity value of at least part of the reflected optical radiation (RadRef);
wherein said electronic processing means (108) are arranged to determine the adhesion value of the rail (R) solely as a function of the intensity value detected by said single optical radiation sensor.

10. Vehicle comprising:
- at least one wheel (W) arranged to rotate on a rail (R);
- a system (100) for determining an adhesion value of a rail (R) according to any of the preceding claims.

11. Method for determining an adhesion value of a rail (R), implemented by means of electronic processing means (108), comprising the steps of:
i) emitting an optical radiation (Rad) in the direction of said rail (R);
ii) detecting an intensity value of at least part of a reflected optical radiation (RadRef), which is generated by at least one of:
• the reflection of said emitted optical radiation (Rad) on said rail (R);
• the reflection of said emitted optical radiation (Rad) on a contaminating material (202) arranged on said rail (R);
iii) determining the adhesion value of the rail (R) as a function of the intensity value measured in step ii).

12. Method according to claim 11, wherein, step iii) further comprises the following steps:
- comparing the intensity value detected in step ii) with a plurality of predetermined intensity values each associated with a respective adhesion value;
- determining that the adhesion value of the rail (R) corresponds to the adhesion value associated with the predetermined intensity value corresponding to the intensity value detected in step ii) or closer to the intensity value detected in step ii).

13. Method according to claim 11 or 12, wherein:
- step i) comprises: emitting the optical radiation (Rad) in the direction of said rail (R) by means of a single optical radiation generator;
- step ii) comprises: detecting the intensity value of at least part of the reflected optical radiation (RadRef), by means of a single optical radiation sensor;
- step iii) comprises: determining the adhesion value of the rail (R) solely as a function of the intensity value detected by the single optical radiation sensor in step ii).
